# EUROPÄISCHE PATENTSCHRIFT

(11) **EP 2 252 494 B1**
(45) Veröffentlichungstag und Bekanntmachung des Hinweises auf die Patenterteilung: **15.06.2011**
(21) Anmeldenummer: 09710340.2
(22) Anmeldetag: 05.02.2009
(51) Int. Cl.: B62D 5/04

(54) **ELEKTRISCHE SERVOLENKUNG MIT ANGETRIEBENER LENKWELLE**
ELECTRICAL POWER STEERING SYSTEM WITH DRIVEN STEERING SHAFT
DIRECTION ASSISTEE ELECTRIQUE AVEC ARBRE DE DIRECTION ENTRAINE

(30) Priorität: 13.02.2008 DE 102008009060
(43) Veröffentlichungstag der Anmeldung: 24.11.2010
(73) Patentinhaber: ThyssenKrupp Presta Aktiengesellschaft, 9492 Eschen (LI)
(72) Erfinder: STECK, Philippe, CH-3123 Belp (CH)
(74) Vertreter: Lenzing Gerber Stute
(86) Internationale Anmeldenummer: PCT/EP2009/000795
(87) Internationale Veröffentlichungsnummer: WO 2009/100850

(56) Entgegenhaltungen:
- EP-A- 1 731 402
- WO-A-2005/100097
- DE-A1-102005 015 438
- DE-A1-102005 015 451
- US-A- 5 010 970

## Beschreibung

Die vorliegende Erfindung betrifft eine elektrische Servolenkung mit den Merkmalen des Oberbegriffs des Anspruchs 1.

Elektrische Servolenkungen sind in verschiedenen Bauformen bekannt. Dabei unterscheidet man zwischen Servolenkungen, bei denen der Servoantrieb auf die Zahnstange eines Zahnstangenlenkgetriebes wirkt (rack drive) und solchen Lenkungen, bei denen der Servoantrieb auf die Lenkwelle wirkt(column drive). Während bei den erstgenannten Lenkungen die Lenkunterstützungskraft unmittelbar in die Zahnstange angebracht wird und die Lenkwelle nur die vom Fahrer in das Lenkrad eingeleiteten Drehmomente übertragen muss, gehen bei den column-drive-Lenkungen sowohl das Lenkhandmoment des Fahrers als auch das Lenkunterstützungsmoment des Servoantriebs über die Lenkwelle. Die Lenkwelle muss in der Summe höhere Momente übertragen können. Aus diesem Grund sind column-drive-Lenkungen bislang nur bei kleinen und leichten Fahrzeugen zu finden. In Fahrzeugen der Mittelklasse sind die zu übertragenden Drehmomente so groß, dass die Lenkwelle und die darin vorgesehenen Gelenke groß und damit teuer und schwer werden würden.

Da andererseits die column-drive-Lenkungen auch Vorteile haben, wird der Einsatz solcher Lenkungen in Mittelklassefahrzeugen angestrebt. Die Vorteile bestehen in einem einfacheren Getriebeaufbau, der insbesondere keine Integration des Servoantriebs in das Lenkgetriebe erfordert. Weiter ist von Vorteil, dass der Servoantrieb im Bereich der Lenksäule angeordnet werden kann, wo der erforderliche Bauraum in manchen Fällen leichter zur Verfügung gestellt werden kann, als im Bereich des Lenkgetriebes, das hinsichtlich des Bauraums mit dem Fahrzeugantrieb und der Vorderachse in Konkurrenz steht.

Eine gattungsgemäße Servolenkung mit Antrieb auf die Lenkwelle ist in der Deutschen Offenlegungsschrift DE 102005015451 A1 dargestellt. Die Lenkwelle hat in jeder Situation die gleiche Drehgeschwindigkeit wie das Lenkrad.

Die Europäische Patentschrift EP 0189172 B1 zeigt eine Vielzahl von Getriebeanordnungen für elektrische Servolenkungen, bei denen eine feste oder variable Getriebeübersetzung zwischen dem Lenkrad und dem Lenkgetriebe erzielt werden kann. Diese Getriebe sind im Aufbau zum Teil sehr komplex. Sie sollen insbesondere sogenannte Überlagerungslenkungen ermöglichen.

Aus der Europäischen Patentschrift EP 1199243 B1 ist eine Lenkung bekannt, die eine feststehende Lenkradnabe aufweist. Diese feststehende Lenkradnabe soll ein sich im Betrieb nicht mitdrehendes Airbagmodul aufnehmen. Weil die Winkelposition des Airbags in diesem Bauelement fest ist, können nicht rotationssymmetrische Airbags zum Einsatz kommen, was als vorteilhaft angesehen wird. Außerdem kann die feststehende Lenkradnabe elektrische Bedienelemente aufnehmen, ohne dass deren Versorgungsspannung über so genannte Drehkoppler geführt werden muss. Die technische Realisierung sieht vor, dass das Lenkrad mit einem Zahnkranz mit Innenverzahnung ausgestattet ist, der unmittelbar karosserieseitig bzw. lenksäulenseitig drehbar gelagert ist. Diese Hohlrad kämmt an seiner Innenseite mit einem Sternrad, das die Lenkwelle antreibt. Es findet eine Übersetzung ins Schnelle statt, die Drehwinkelgeschwindigkeit des Lenkrades ist also um einen konstanten Faktor niedriger als die damit gekoppelte Drehwinkelgeschwindigkeit der Lenkwelle. Es wird als nachteilig betrachtet, dass die Lagerung und das Übersetzungsgetriebe unmittelbar in der Nähe des Lenkradkranzes angeordnet sein müssen, was die Gestaltung dieser Baugruppe einschränkt.

Eine ähnliche Lenksäule mit feststehendem Airbagmodul und einem in der Lenksäule angeordneten Getriebe ist aus der Offenlegungsschrift WO2005/100097A1 bekannt.

Aus der deutschen Offenlegungsschrift DE 10 2006 031 290 A1 ist eine elektrische Servolenkung bekannt, bei der ein Getriebe mit einer angetriebenen Zwischenwelle vorgesehen ist. Die Zwischenwelle dreht sich mit höherer Winkelgeschwindigkeit als die Lenkwelle. Es ist eine Rückübersetzung von der Zwischenwelle zu dem Eingang des Lenkgetriebes vorgesehen, so dass das Lenkgetriebe mit derselben Übersetzung versehen sein kann, wie bei Verwendung einer Lenkwelle ohne Zwischenwelle.

Es ist deshalb Aufgabe der vorliegenden Erfindung, eine Servolenkung mit angetriebener Lenkwelle und mitdrehender Lenkradnabe so auszubilden, dass die bei mittelschweren und schweren Pkw erforderliche Unterstützungsleistung mit einer column-drive-Servolenkung zur Verfügung gestellt werden kann, ohne dass die Lenkwelle oder andere Bauelemente der Lenkung übermäßig groß und schwer dimensioniert werden müssen.

In der Aufgabe wird von einer elektrischen Servolenkung für ein Kraftfahrzeug gelöst, die folgende Komponenten aufweist:
- eine obere Lenkwelle, die an ihrem einen Ende drehfest ein Steuerrad trägt,
- eine untere Lenkwelle, die mit einem Getriebeteil zur Einkopplung der Drehung der unteren Lenkspindel in ein Getriebe zur Umwandlung der Drehung in eine Translationsbewegung zur Verschwenkung mindestens eines lenkbaren Rades des Kraftfahrzeugs verbindbar ist,

- mindestens ein Gelenk, das zwischen der unteren Lenkwelle und einem Lenkgetriebe angeordnet ist,
- eine Hilfskraftunterstützungseinrichtung, die über einen Verzahnungseingriff mit der Lenkwelle zur Einleitung eines von der Lenkbewegung abgeleiteten Drehmoments gekoppelt ist, wobei
- zwischen der oberen Lenkwelle und der unteren Lenkwelle ein Übersetzungsgetriebe eingeschaltet ist, welches eine Drehbewegung mit einer ersten Winkelgeschwindigkeit der oberen Lenkwelle in eine Drehbewegung der unteren Lenkwelle mit einer zweiten Winkelgeschwindigkeit übersetzt, wobei die zweite Winkelgeschwindigkeit größer ist als die erste Winkelgeschwindigkeit,
- wobei die Hilfskraftunterstützungseinrichtung über den Verzahnungseingriff mit der unteren Lenkwelle in antriebsmäßiger Verbindung steht, und
- wobei die untere Lenkwelle ohne Zwischenschaltung eines Reduziergetriebes mit dem Eingang des Lenkgetriebes verbunden ist,
- wobei das Getriebe und der Verzahnungseingriff in einem gemeinsamen Getriebegehäuse angeordnet sind.

Weil zwischen der oberen Lenkwelle und der unteren Lenkwelle ein Übersetzungsgetriebe eingeschaltet ist, welches eine Drehbewegung mit einer ersten Winkelgeschwindigkeit der oberen Lenkwelle in eine Drehbewegung der unteren Lenkwelle mit einer zweiten Winkelgeschwindigkeit übersetzt, wobei die zweite Winkelgeschwindigkeit größer ist als die erste Winkelgeschwindigkeit, und weil die HilfskraftUnterstützungseinrichtung über den Verzahnungseingriff mit der unteren Lenkwelle in antriebsmäßiger Verbindung steht, wird ein einfaches Getriebe im Bereich der oberen Lenkwelle verwendet, um die Leistung der Unterstützungseinrichtung auf einen mit höherer Winkelgeschwindigkeit laufende und deshalb niedrigere Drehmomente übertragende untere Lenkwelle eingekoppelt. Die untere Lenkwelle kann deshalb kleiner dimensioniert werden als es bei einer Lenkwelle der Fall wäre, die sich mit der gleichen Winkelgeschwindigkeit wie das Lenkrad dreht und die dennoch die volle Leistung des Servoantriebs zu übertragen hätte.

Weil weiter die untere Lenkwelle ohne Zwischenschaltung eines Reduziergetriebes mit dem Eingang des Lenkgetriebes verbunden ist, ist zwischen dem Lenkrad und dem Lenkgetriebe nur ein Verzahnungseingriff erforderlich. Dadurch werden die Spiel- und Geräuschentwicklung sowie das Gewicht verringert. Das Lenkgetriebe ist in seiner Übersetzung so angepasst, dass die Übersetzung des ersten Übersetzungsgetriebes im wesentlichen kompensiert wird.

Vorzugsweise ist das Getriebegehäuse beispielsweise in einer Konsole der Lenksäule in der Nähe des Lenkrades angeordnet. Dabei wäre auch aus Gründen des Bauraums vorteilhaft, wenn das Getriebegehäuse in einer gegenüber der Karosserie des Kraftfahrzeugs verschwenkbaren und/oder teleskopierbaren Lenksäule angeordnet wäre.

Vorzugsweise ist das Lenkgetriebe ein Zahnstangenlenkgetriebe mit einer der erhöhten Winkelgeschwindigkeit der unteren Lenkwelle angepassten Verzahnung, deren Übersetzungsverhältnis die erhöhte Winkelgeschwindigkeit kompensiert.

Wenn die obere Lenkwelle an ihrem dem Steuerrad abgewandten Ende mit einer Eingangswelle eines Zwei-Wellen-Getriebes verbunden ist, kann die obere Lenkwelle und der Anschluss des Lenkrades mit sich mitdrehender Lenkradnabe im Wesentlichen konventionell sein, was den Vorteil bietet, dass kleine und leichte Wellenkomponenten, Flansche und Lagerungen zum Einsatz kommen können. Der Verzahnungseingriff, über den der Servoantrieb mit der unteren Lenkwelle gekoppelt ist, kann ein Schneckengetriebe sein, was den Vorteil einer kompakten und bekannten Bauweise aufweist. Es kann auch vorgesehen sein, dass der Verzahnungseingriff ein Zahnriemengetriebe ist, dass andere Vorteile z. B. hinsichtlich der Geräuschentwicklung aufweist. Als ein besonders vorteilhaftes Übersetzungsverhältnis hat sich ein Faktor 1,4 oder größer erwiesen. Bei einem Faktor von 1,4 ist die über die zweite Lenkwelle übertragene Servoleistung auf Grund der höheren Drehwinkelgeschwindigkeit bei ansonsten ähnlicher Dimensionierung wie für leichte PKW auch für mittelschwere PKW ausreichend, ohne dass die Lenkwelle und die darin enthaltenen Gelenke größer dimensioniert werden müssten. Zum Zweiten ist bei dieser Auslegung des Übersetzungsverhältnisses vorteilhaft, dass eine Rückübersetzung im Lenkgetriebe nicht über ein separates Reduziergetriebe vorgenommen werden muss, sondern allein über eine Anpassung der Verzahnungsgeometrie des Eingriffs zwischen Lenkritzel und Zahnstange erfolgen kann. Es entsteht folglich im Bereich des Lenkgetriebes kein baulicher Mehraufwand.

Nachfolgend werden zwei Ausführungsbeispiele der Erfindung anhand der Zeichnung beschrieben. Es zeigen:
- Fig. 1:: eine Lenksäulenanordnung mit Übersetzungsgetriebe und Servoantrieb in einem gemeinsamen Getriebegehäuse, in einer schematischen Darstellung;
- Fig. 2:: eine Darstellung ähnlich Fig. 1 mit räumlicher Trennung zwischen Übersetzungsgetriebe und Servoantrieb;
- Fig. 3:: eine Getriebeanordnung für ein Lenksystem nach Fig. 1 mit einem Drehmomentsensor in der unteren Lenkwelle; sowie
- Fig. 4:: eine Getriebeanordnung für ein Lenksystem nach Fig. 1 mit einem Drehmomentsensor in der oberen Lenkwelle.

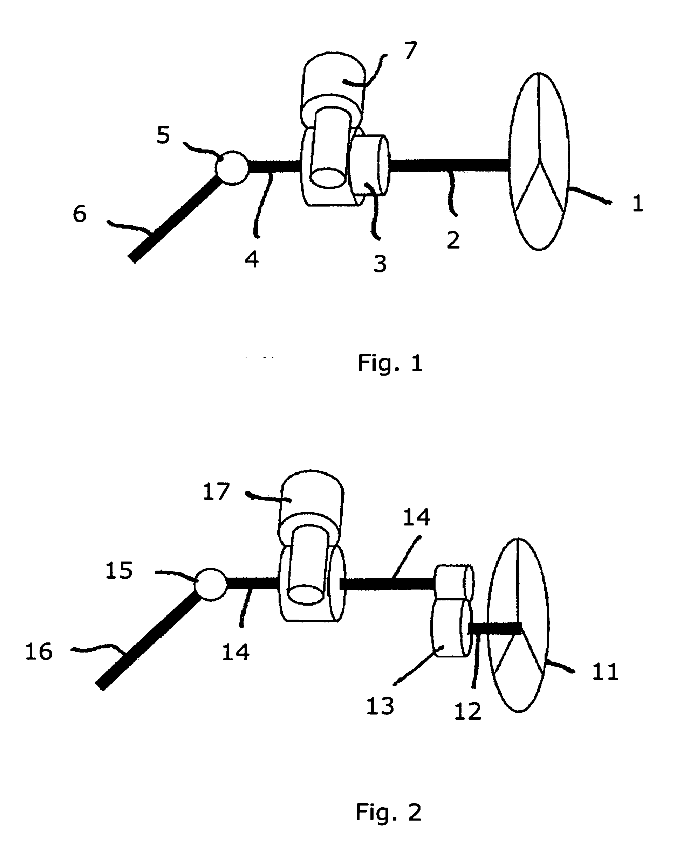

Die Fig. 1 zeigt schematisch eine Lenksäule eines Kraftfahrzeuges mit einem Steuerrad 1, das unmittelbar drehfest mit einer oberen Lenkwelle 2 verbunden ist. Die obere Lenkwelle 2 ist antriebsmäßig verbunden mit einem Getriebe 3. Das Getriebe 3 wiederum treibt ausgangsseitig eine untere Lenkwelle 4 an, die über ein Gelenk 5 mit einer mittleren Lenkspindel 6 und dann mit einem Zahnstangen-Lenkgetriebe verbunden ist. Das Getriebe 3 trägt an seinem Gehäuse einen elektrischen Servomotor 7.

Die Fig. 2 zeigt eine Lenkung ähnlich Fig. 1. Hier ist ein Steuerrad 11 mit einer oberen Lenkwelle 12 verbunden. Die obere Lenkwelle 12 ist die Eingangswelle eines als Stirnrädergetriebe 13 ausgeführten Zweiwellengetriebes. Die Ausgangswelle des Zweiwellengetriebes 13 ist eine untere Lenkwelle 14, die in ihrem mittleren Bereich einen Servoantrieb 17 trägt. Die untere Lenkwelle 14 ist weiter über ein Gelenk 15 mit einer mittleren Lenkspindel 16 gekoppelt, die schließlich wiederum mit einem nicht dargestellten Zahnstangen-Lenkgetriebe in Wirkverbindung steht.

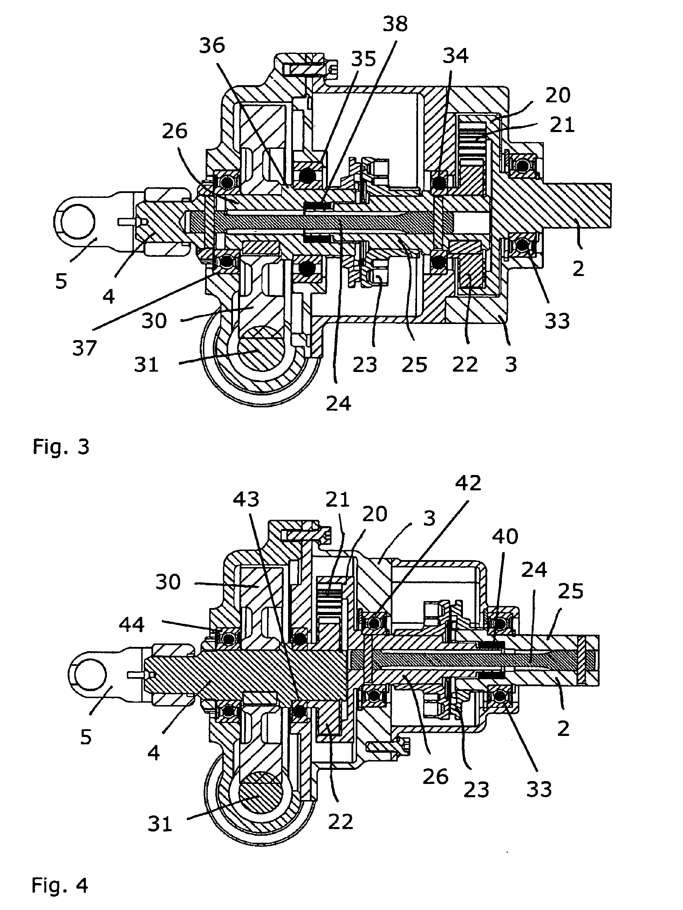

Die Fig. 3 zeigt das Getriebe aus Fig. 2 in einem Längsschnitt. Die Eingangswelle des Getriebes ist die obere Lenkwelle 2, die in dem Getriebegehäuse 3 gelagert ist. An ihrem freien Ende innerhalb des Getriebegehäuses 3 trägt die obere Lenkwelle 2 ein Hohlrad 20 mit einer Innenverzahnung 21. Die Innenverzahnung 21 kämmt mit einem Stirnrad 22, das wiederum koaxial und im Wesentlichen drehfest mit der unteren Lenkwelle 4 verbunden ist. Ein an sich bekannter Drehmomentsensor 23 ist zwischen das Stirnrad 22 und die untere Lenkwelle 4 eingeschaltet. Der Drehmomentsensor 23 umfasst eine Drehstabfeder 24, die eine Relativdrehung eines ersten Wellenteils 25 und eines zweiten Wellenteils 26 gegeneinander erlaubt. Die Relativdrehung wird von dem Drehmomentsensor 23 erfasst und ist ein Maß für das an der oberen Lenkwelle 2 manuell ausgeübte Drehmoment.

Die untere Lenkwelle 4 trägt an ihrem freien Ende das Gelenk 5, das zum Einen als Kardangelenk zur drehfesten Kopplung mit der nicht dargestellten mittleren Lenkspindel 6 ausgebildet sein kann, das aber auch die Schwenkbewegung eine verschwenkbaren Lenksäule ermöglicht, wenn das Getriebe 3 in dem oberen, steuerradnahen Teil einer verstellbaren Lenksäule angeordnet ist.

Die untere Lenkwelle 4 trägt weiter ein Zahnrad 30, das von einem Schneckenrad 31 angetrieben ist. Das Schneckenrad 31 ist wiederum mit der Motorwelle eines hier nicht dargestellten elektrischen Servomotors 7 verbunden, so dass bei Bestromung des Servomotors 7 das Schneckenrad 31 in Drehung versetzt wird, wodurch das Zahnrad 30 angetrieben wird und damit ein Drehmoment auf die untere Lenkwelle 4 aufgeprägt wird.

Die Fig. 4 zeigt eine andere Ausführungsform des Getriebes 3, wobei im Wesentlichen gleiche Komponenten mit gleichen Bezugsziffern versehen sind.

Bei dieser Ausführungsform ist die obere Lenkwelle 2 mit dem Drehmomentsensor 23 versehen, derart, dass ein erster Wellenteil 25 unmittelbar die Eingangswelle des Getriebes bildet, während der zweite Wellenteil 26 unmittelbar mit dem Hohlrad 20 verbunden ist. Das Hohlrad 20 kämmt auch hier über die Innenverzahnung 21 mit einem Stirnrad 22, welches die untere Lenkwelle 4 antreibt. Die untere Lenkwelle 4 trägt ebenfalls das Zahnrad 30, welches im Eingriff mit dem Schneckenrad 31 steht.

Die obere Lenkwelle 2 ist in einem nach außen abgedichteten Kugellager 33 unmittelbar in dem Getriebegehäuse 3 gelagert. Bei der Ausführungsform nach Fig. 3 ist ein weiteres Kugellager 34 zur Lagerung des ersten Wellenteils 25 der Drehmomentsensoranordnung im Getriebegehäuse 3 vorgesehen. Das Lager 34 stützt diese Welle in unmittelbarer Nachbarschaft des Stirnrades 22 ab. Ein weiteres Kugellager 35 ist zur Lagerung des zweiten Wellenteils 26 und der damit einstückigen unteren Lenkwelle 4 in dem Gehäuse 3 vorgesehen. Dieses Lager 35 stützt die untere Lenkwelle 4 in Axialrichtung in einem Bund 36, an dem auch das Zahnrad 30 anliegt. In weitere Fortsetzung der unteren Lenkwelle 4 ist an der anderen, in Fig. 3 linken Seite des Zahnrades 30 ein viertes Kugellager 37 vorgesehen, das die Ausgangsseite des Getriebes in Gehäuse 3 lagert. Das Kugellager 37 ist wie das erstgenannte Kugellager 33 nach außen abgedichtet. Die Lagerung ist wartungsfrei. Ergänzend ist das der unteren Lenkwelle 4 zugewandte Ende des ersten Wellenteils 25 in einem Nadellager 38 drehbar in dem angrenzenden zweiten Wellenteil 26 gelagert, so dass die Drehmomentsensoranordnung in diesen Bereich gegen ein Verkippen in Radialrichtung abgestützt ist. Das Nadellager 38 bewirkt letztlich auch eine präzise Führung der Komponenten des Drehmomentsensors 23 relativ zueinander, die berührungsfrei mit einem genau definierten Luftspalt arbeiten.

Der Aufbau der Lagerung in der Fig. 4 ist analog zu denjenigen in der Fig. 3. Hier ist die Drehmomentsensoranordnung 23 - 26 antriebsmäßig zwischen dem Eingang der oberen Lenkwelle 2 und dem Übersetzungsgetriebe angeordnet. Ein Nadellager 40 stützt den ersten Wellenteil 25 gegenüber dem zweiten Wellenteil 26 im Bereich des Drehmomentsensors 23 ab. Der zweite Wellenteil 26 ist unmittelbar neben dem Übersetzungsgetriebe in einem Kugellager 42 gelagert. Das Kugellager 42 nimmt hier die Radialkräfte auf, die im Verzahnungseingriff zwischen dem Hohlrad 20 und dem Stirnrad 22 auftreten. Die untere Lenkwelle 4 ist einteilig und unmittelbar neben dem Zahnrad 30 beidseits in Kugellagern 43 und 44 gelagert.

Es ist ersichtlich, dass der Getriebeaufbau in den Figuren 3 und 4 ausgesprochen kompakt ist. Insbesondere ist die Lagerung der unteren Lenkwelle 4 in den Kugellagern 35 und 37 bzw. 43 und 44 in einem geringen axialen Abstand von dem Zahnrad 30 des Servoantriebs vorgesehen, so dass die Führung der unteren Lenkwelle 4 in diesem Bereich sehr präzise und damit laufruhig ist. Auch das Übersetzungsgetriebe zwischen der oberen Lenkwelle 2 und der unteren Lenkwelle 4 nimmt nur einen geringen axialen Bauraum zwischen den Lagern 33 und 34 bzw. 42 und 43 ein. Eine präzise Führung ist auch dort gewährleistet, so dass dauerhaft ein spielfreier und geräuscharmer Betrieb gewährleistet sein wird. Die axiale Baulänge des Getriebes wird wesentlich von dem Platzbedarf des Drehmomentsensors bestimmt, der bei diesen beiden Ausführungsbeispielen in dem Getriebe integriert ist.

Es ist weiter ersichtlich, dass die beiden Getriebe nach den Figuren 3 und 4 reine Zweiwellengetriebe sind, die ohne Zwischenwellen auskommen. Der Wegfall von Zwischenwellen spart Bauraum, zusätzlichen Aufwand für Lagerungen und minimiert im Betrieb die Reibung und die Geräuschentwicklung.

Bei dem Ausführungsbeispiel der Fig. 3 liegt der Drehmomentsensor 23 im Kraftschluss der unteren Lenkwelle 4, so dass der Sensor wegen der geringeren auftretenden Drehmomente kleiner dimensioniert werden kann. Bei dem Getriebe gemäß Fig. 4 liegt der Drehmomentsensor im Kraftschluss der oberen Lenkwelle 2, die geringere Winkelgeschwindigkeiten, dafür aber höhere Drehmomente aufweist. Der Drehstab 24 ist entsprechend etwas dicker auszuführen. Vorteilhaft bei der Ausführungsform nach Fig. 4 wird jedoch sein, dass der Drehstab 24 sich zwischen dem fahrerseitigen Ende der oberen Lenkwelle 2, also dem Lenkrad, und den Getriebezahnrädern befindet. Diese Anordnung lässt eine verbesserte Vibrations- und Geräuschdämpfung erwarten.

Die verwendeten Zahnräder, insbesondere das Stirnrad 22 und das Zahnrad 30, sind an sich bekannt. Sie werden als separate Bauteile gefertigt und in einer Presspassung auf die jeweiligen Wellen aufgesetzt, wobei eine Passfeder die Position in Umfangsrichtung zusätzlich sichert.

Die Getriebeanordnung aus den Figuren 3 und 4 kann in unmittelbarer Nähe des Lenkrades eines Kraftfahrzeugs in der Lenksäule angeordnet sein. Diese Montageposition hat für eine elektrische Servolenkung den Vorteil, dass hier Umwelteinflüsse wie Staub, Salz und Nässe vom Lenkgetriebe ferngehalten werden und dass an dieser Stelle ohnehin eine Vielzahl von elektrischen Steuer- und Versorgungsleitungen vorhanden sind, die zum Betrieb der Servolenkung erforderlich sind.

In der Betriebsposition wird die obere Lenkwelle 2 entweder direkt mit einer sich im Betrieb mitdrehenden Lenkradnabe oder mit einer oberen Lenkspindel (nicht dargestellt) verbunden, so dass eine Drehung des Lenkrades zwangsläufig eine Drehung der oberen Lenkwelle 2 und damit des Hohlrades 20 um den gleichen Drehwinkel bewirkt. Das Hohlrad 20 kämmt mit dem Stirnrad 22, wobei der Umfang der Innenverzahnung 21 größer ist als derjenige der äußeren Verzahnung des Stirnrades 22, so dass eine Übersetzung der anliegenden Drehzahlen erfolgt. Eine Drehung des Hohlrades 20 um einen bestimmten Winkel bewirkt eine entsprechende zwangsläufige Drehung des Stirnrades 22 um einen größeren Winkel, wobei der Faktor dem Übersetzungsverhältnis entspricht. Falls das Übersetzungsverhältnis 1,4 beträgt, bewirkt also eine Drehung des Lenkrades um 90° eine entsprechende zwangläufige Drehung des Stirnrades 22 und damit der Lenkwelle 4 um 90 x 1,4 = 126°.

Der Drehmomentsensor 23 erfasst die Verdrehung des ersten Wellenteils 25 gegenüber dem zweiten Wellenteil 26 entgegen der Rückstellkraft des Drehstabs 24. Derartige Drehmomentsensoren sind bekannt. Sie geben ein Signal proportional zu dem anlegenden Drehmoment ab. Eine nicht dargestellte Steuerung beaufschlagt je nach anliegendem Drehmoment den Servomotor 7 mit Strom, so dass eine Unterstützungskraft zur Verfügung gestellt wird, die das vom Fahrer an der oberen Lenkwelle aufzuwendende Drehmoment begrenzt.

Der Servomotor 7 treibt dann über das Schneckenrad 31 das Zahnrad 30 an, das wiederum drehfest mit der unteren Lenkwelle 4 verbunden ist. Die untere Lenkwelle 4 läuft mit einer gegenüber der oberen Lenkwelle 2 ins Schnelle übersetzten höheren Drehzahl bzw. Drehwinkelgeschwindigkeit. Dies bedeutet, dass für eine bestimmte Unterstützungsleistung auf Grund der höheren Drehwinkelgeschwindigkeit ein geringeres Drehmoment erforderlich ist. Würde die untere Lenkwelle 4 mit der gleichen Winkelgeschwindigkeit drehen wie die obere Lenkwelle 2, so wäre das zur Erzielung einer vorgegebenen, erforderlichen mechanischen Unterstützungsleistung erforderliche Drehmoment um den entsprechenden Faktor höher. Die von dem Zahnradpaar 20, 22 erzeugte Übersetzung bewirkt also eine Reduzierung der über die untere Lenkwelle 4 zu übertragenen Drehmomente, was Auswirkungen auf die Dimensionierung der unteren Lenkwelle 4 und der nachgeschalteten Komponenten (Gelenk 5, mittlere und untere Lenkspindel) hat.

Die Dimensionierung der unteren Lenkwelle 4 und der nachgeschalteten, Drehmomente übertragenden Bauelemente kann gegenüber einer Servolenkung mit Antrieb der Zahnstange (elektrisch oder hydraulisch) im Wesentlichen unverändert beibehalten werden, da das zu übertragende Drehmoment nicht vergrößert wird, obwohl zu der vom Fahrer über das Lenkrad eingeleiteten mechanischen Leistung auch die Unterstützungsleistung des elektrischen Servomotors hinzukommt. Die über die untere Lenkwelle 4 übertragene mechanische Leistung steigt, da dies aber bei einer erhöhten Drehzahl erfolgt, kann das Drehmoment im Wesentlichen niedrig gehalten werden. Es können die bewährten und bereits vorhandenen Lenksäulenkomponenten verwendet werden.

Wenn die Übersetzung durch das Stirnräderpaar 20, 22 etwa im Bereich von 1,4 bleibt, ist keine Rückübersetzung durch ein separates Reduziergetriebe am Eingang der Zahnstangenlenkung erforderlich. Vielmehr kann diese erhöhte Drehzahl der unteren Lenkwelle 4 durch eine entsprechend angepasste Verzahnung zwischen dem Ritzel der Zahnstangenlenkung und der Verzahnung der Zahnstange kompensiert werden.

Die Ausführung als Zweiwellengetriebe mit einer Eingangswelle 2 und einer Ausgangswelle 4, wobei der Servoantrieb unmittelbar auf die Ausgangswelle 4 wirkt, ermöglicht eine besonders kompakte Anordnung mit nur wenigen beweglichen Teilen innerhalb des Getriebegehäuses 3. Das Lenkrad kann unmittelbar mit der oberen Lenkwelle 2 verbunden werden. Es ist keine separate Lagerung der Lenkradnabe erforderlich.

Bei alternativen Ausführungsformen kann das Übersetzungsgetriebe in der gezeigten Bauform eines Zweiwellengetriebes in der Nähe des Lenkrades angeordnet werden, während der Servoantrieb an anderer Stelle der unteren Lenkwelle 4 angeordnet werden kann. Die erfindungsgemäßen Vorteile stellen sich ein, wenn der Servoantrieb mit der mit höherer Winkelgeschwindigkeit laufenden unteren Lenkwelle 4 gekoppelt wird. Allerdings sind die spezifischen Vorteile der besonders kompakten Bauform und der vorteilhaften Anordnung in der Nähe des Lenkrades bei den Ausführungen nach den Figuren 3 und 4 offensichtlich. Die vorliegende Erfindung stellt also eine elektrische Servolenkung von der Bauart einer column-drive-Lenkung zur Verfügung, die die manuell aufgebrachte Leistung und die Unterstützungsleistung des Servoantriebs über die gleiche Lenkwelle an das Lenkgetriebe leitet, wobei die Lenkwelle klein und leicht dimensioniert werden kann, weil sie relativ geringe Drehmomente mit erhöhter Drehzahl überträgt. Diese elektrische Servolenkung ist für schwerere Kraftfahrzeuge geeignet als es bisher bei column-drive-Servolenkungen möglich war.

### Bezugszeichenliste

- 1.: Steuerrad
- 2.: Obere Lenkwelle
- 3.: Getriebegehäuse
- 4.: Untere Lenkwelle
- 5.: Gelenk
- 6.: Lenkspindel
- 7.: Elektrischer Servomotor
- 11.: Steuerrad
- 12.: Obere Lenkwelle
- 13.: Stirnrädergetriebe
- 14.: Untere Lenkwelle
- 16.: Lenkspindel
- 17.: Servoantrieb
- 20.: Hohlrad
- 21.: Innenverzahnung
- 22.: Stirnrad
- 23.: Drehmomentsensor
- 24.: Drehstabfeder
- 25.: Wellenteil
- 26.: Wellenteil
- 30.: Zahnrad
- 31.: Schneckenrad
- 33.: Kugellager
- 34.: Kugellager
- 35.: Kugellager
- 36.: Bund
- 37.: Kugellager
- 38.: Nadellager
- 40.: Kugellager
- 42.: Kugellager
- 43.: Kugellager
- 44.: Kugellager

## Patentansprüche

1. Elektrische Servolenkung für ein Kraftfahrzeug mit folgenden Komponenten:
- einer oberen Lenkwelle (2), die an ihrem einen Ende drehfest ein Steuerrad (1) trägt,
- einer unteren Lenkwelle (4), die mit einem Getriebeteil zur Einkopplung der Drehung einer unteren Lenkspindel (6, 16) in ein Lenkgetriebe zur Umwandlung der Drehung in eine Translationsbewegung zur Verschwenkung mindestens eines lenkbaren Rades des Kraftfahrzeugs verbindbar ist,
- einer Hilfskraftunterstützungseinrichtung (7, 17), die über einen Verzahnungseingriff (30, 31) mit der Lenkwelle zur Einleitung eines von der Lenkbewegung abgeleiteten Drehmoments gekoppelt ist,
- wobei
- zwischen der oberen Lenkwelle (2) und der unteren Lenkwelle (4) ein Übersetzungsgetriebe (20 - 22) eingeschaltet ist, welches eine Drehbewegung mit einer ersten Winkelgeschwindigkeit der oberen Lenkwelle (2) in eine Drehbewegung der unteren Lenkwelle (4) mit einer zweiten Winkelgeschwindigkeit übersetzt,
- wobei die Hilfskraftunterstützungseinrichtung (7, 17) über den Verzahnungseingriff (30, 31) mit der unteren Lenkwelle (4) in antriebsmäßiger Verbindung steht,
- die zweite Winkelgeschwindigkeit mit einem konstanten Übersetzungsfaktor größer ist als die erste Winkelgeschwindigkeit, und
- die untere Lenkwelle (4) ohne Zwischenschaltung eines Reduziergetriebes mit dem Eingang des Lenkgetriebes verbunden ist
- **dadurch gekennzeichnet, dass**
- das Getriebe (20 - 22) und der Verzahnungseingriff (30, 31) in einem gemeinsamen Getriebegehäuse (3) angeordnet sind.

2. Lenksystem nach Anspruch 1, **dadurch gekennzeichnet, dass** das Lenkgetriebe ein Zahnstangenlenkgetriebe mit einer der erhöhten Winkelgeschwindigkeit der unteren Lenkwelle (4) angepassten Verzahnung ist, deren Übersetzungsverhältnis die erhöhte Winkelgeschwindigkeit kompensiert.

3. Lenksystem nach einem der vorhergehenden Ansprüche,
**dadurch gekennzeichnet, dass** die obere Lenkwelle (2) an ihrem dem Steuerrad (1) abgewandten Ende mit einer Eingangswelle eines Zweiwellengetriebes verbunden ist.

4. Lenksystem nach einem der vorhergehenden Ansprüche,
**dadurch gekennzeichnet, dass** der Verzahnungseingriff (30, 31) ein Schneckengetriebe bildet.

5. Lenksystem nach einem der vorhergehenden Ansprüche,
**dadurch gekennzeichnet, dass** der Verzahnungseingriff ein Zahnriemengetriebe bildet.

6. Lenksystem nach einem der vorhergehenden Ansprüche,
**dadurch gekennzeichnet, dass** das Übersetzungsverhältnis der Drehwinkelgeschwindigkeiten zwischen der oberen (2) und der unteren Lenkwelle (4) größer oder gleich 1,4.

7. Lenksystem nach einem der vorhergehenden Ansprüche,
**dadurch gekennzeichnet, dass** das Getriebegehäuse (3) in einer gegenüber einer Karosserie des Kraftfahrzeugs verschwenkbaren und/oder teleskopierbaren Lenksäule angeordnet ist.

8. Lenksystem nach einem der vorhergehenden Ansprüche, **dadurch gekennzeichnet, dass** ein Drehmomentsensor (23 - 26) mit einem Drehstab (24) im Kraftfluss zwischen dem Steuerrad und dem Übersetzungsgetriebe (20 - 22) angeordnet ist.

9. Lenksystem nach einem der vorhergehenden Ansprüche, **dadurch gekennzeichnet, dass** die untere Lenkwelle (4) in Axialrichtung unmittelbar neben dem Zahnrad (30) des Verzahnungseingriffs in zwei Wälzlagern gelagert ist.

10. Lenksystem nach einem der vorhergehenden Ansprüche, **dadurch gekennzeichnet, dass** die obere Lenkwelle (2) und die untere Lenkwelle (4) unmittelbar neben dem Übersetzungsgetriebe (20 - 22) in jeweils einem Wälzlager (33, 34; 42, 43) gelagert sind

## Claims

1. Electric power-assisted steering for a motor vehicle having the following components:
- an upper steering shaft (2) which at its one end holds a rotationally fixed steering wheel (1),
- a lower steering shaft (4) which can be connected to a gear part for transferring the rotation of a lower steering spindle (6, 16) to a steering gear for transforming the rotation into a translational movement for turning at least one steerable wheel of the motor vehicle,
- a power-assist support device (7, 17) which is coupled to the steering shaft via a toothing engagement (30, 31) for applying a torque derived from the steering movement,
- wherein
- a gear transmission (20 - 22) is placed between the upper steering shaft (2) and the lower steering shaft (4), the said gear transmission (20 - 22) converting a rotary movement at a first angular velocity of the upper steering shaft (2) into a rotary movement of the lower steering shaft (4) at a second angular velocity,
- wherein the power-assist support device (7, 17) is connected to the lower steering shaft (4) via the toothing engagement (30, 31) to provide propulsion,
- the second angular velocity at a constant transmission factor is greater than the first angular velocity and
- the lower steering shaft (4) is connected to the input of the steering gear without interposing a reducing gear,
- **characterised in that**
- the gear (20 - 22) and the toothing engagement (30, 31) are arranged in a common gear housing (3).

2. Steering system according to Claim 1, **characterised in that** the steering gear is a rack and pinion steering gear with teeth adapted to the increased angle velocity of the lower steering shaft (4), the transmission ratio of which compensates the increased angular velocity.

3. Steering system according to any one of the preceding claims, **characterised in that** the upper steering shaft (2) at its end facing away from the steering wheel (1) is connected to an input shaft of a two-shaft gear.

4. Steering system according to any one of the preceding claims, **characterised in that** the toothing engagement (30, 31) is a worm gear.

5. Steering system according to any one of the preceding claims, **characterised in that** the toothing engagement is a toothed belt gear.

6. Steering system according to any one of the preceding claims, **characterised in that** the transmission ratio of the rotational angular velocities between the upper steering shaft (2) and the lower steering shaft (4) is greater than or equal to 1.4.

7. Steering system according to any one of the preceding claims, **characterised in that** the gear housing (3) is arranged in a steering column which can be pivoted and/or telescoped with respect to a motor vehicle body.

8. Steering system according to any one of the preceding claims, **characterised in that** a torque sensor (23 - 26) is arranged with a torsion bar (24) in the power transmission between the steering wheel and the gear transmission (20 - 22).

9. Steering system according to any one of the preceding claims, **characterised in that** the lower steering shaft (4) is mounted on two rolling bearings in the axial direction directly next to the toothed wheel (30) of the toothing engagement.

10. Steering system according to any one of the preceding claims, **characterised in that** the upper steering shaft (2) and the lower steering shaft (4) are mounted in each case on a rolling bearing (33, 34; 42, 43) directly next to the gear transmission (20 - 22).

## Revendications

1. Direction assistée électrique pour un véhicule automobile, comprenant les composants suivants :
- un arbre de direction supérieur (2) qui porte à l'une de ses extrémités un volant (1) solidaire en rotation,
- un arbre de direction inférieur (4), qui est susceptible d'être relié à une partie de mécanisme pour injecter la rotation d'une broche de direction inférieure (6, 16) dans un mécanisme de direction afin de convertir la rotation en un mouvement de translation pour faire pivoter au moins une roue directrice du véhicule automobile,
- un moyen d'assistance à force auxiliaire (7, 17), qui est accouplé via un engagement à denture (30, 31) à l'arbre de direction pour appliquer un couple de rotation dérivé du mouvement de direction,
- dans laquelle
- entre l'arbre de direction supérieur (2) et l'arbre de direction inférieur (4) est intégré un mécanisme à démultiplication (20-22) qui transforme un mouvement de rotation avec une première vitesse angulaire de l'arbre de direction supérieur (2) en un mouvement de rotation de l'arbre de direction inférieur (4) avec une seconde vitesse angulaire,
- dans laquelle le moyen d'assistance à force auxiliaire (7, 17) se trouve en liaison d'entraînement avec l'arbre de direction inférieur (4) via l'engagement à denture (30, 31),
- la seconde vitesse angulaire est supérieure à la première vitesse angulaire, à raison d'un facteur de démultiplication constant, et
- l'arbre de direction inférieur (4) est relié à l'entrée du mécanisme de direction sans interposition d'un mécanisme réducteur,
- **caractérisé en ce que**
- le mécanisme (20-22) et l'engagement à denture (30, 31) sont agencés dans un boîtier de mécanisme commun (3).

2. Système de direction selon la revendication 1,
**caractérisé en ce que** le mécanisme de direction est un mécanisme de direction à crémaillère avec une denture adaptée à la vitesse angulaire supérieure de l'arbre de direction inférieur (4), dont le rapport de démultiplication compense la vitesse angulaire supérieure.

3. Système de direction selon l'une des revendications précédentes, **caractérisé en ce que** l'arbre de direction supérieur (2) est relié, à son extrémité détournée du volant (1), avec un arbre d'entrée d'un mécanisme à deux arbres.

4. Système de direction selon l'une des revendications précédentes, **caractérisé en ce que** l'engagement à denture (30, 31) forme un mécanisme à vis tangente.

5. Système de direction selon l'une des revendications précédentes, **caractérisé en ce que** l'engagement à denture forme une transmission à courroie dentée.

6. Système de direction selon l'une des revendications précédentes, **caractérisé en ce que** le rapport de démultiplication des vitesses angulaires entre l'arbre de direction supérieur (2) et l'arbre de direction inférieur (4) est supérieur ou égal à 1,4.

7. Système de direction selon l'une des revendications précédentes, **caractérisé en ce que** le boîtier de mécanisme (3) est agencé dans une colonne de direction pivotante et/ou télescopique par rapport à une carrosserie du véhicule automobile.

8. Système de direction selon l'une des revendications précédentes, **caractérisé en ce qu'**un capteur de couple de rotation (23-26) avec un barreau tournant (24) est agencé dans le trajet des efforts entre le volant et le mécanisme à démultiplication (20-22).

9. Système de direction selon l'une des revendications précédentes, **caractérisé en ce que** l'arbre de direction inférieur (4) est monté dans deux paliers à roulements en direction axiale immédiatement à côté de l'engrenage (30) de l'engagement à denture.

10. Système de direction selon l'une des revendications précédentes, **caractérisé en ce que** l'arbre de direction supérieur (2) et l'arbre de direction inférieur (4) sont montés dans des paliers à roulements respectifs (33, 34 ; 42, 43) immédiatement à côté du mécanisme à démultiplication (20-22).
